# EUROPÄISCHE PATENTSCHRIFT

(11) **EP 2 445 696 B1**
(45) Veröffentlichungstag und Bekanntmachung des Hinweises auf die Patenterteilung: **24.04.2013**
(21) Anmeldenummer: 10718149.7
(22) Anmeldetag: 30.04.2010
(51) Int. Cl.: B29C 45/37

(54) **VERÄNDERBARER KENNZEICHUNGSSTEMPEL**
VARIABLE INDEXING STAMP / MARKING PUNCH
TAMPON DE MARQUAGE VARIABLE

(30) Priorität: 23.06.2009 DE 102009027108
(43) Veröffentlichungstag der Anmeldung: 02.05.2012
(73) Patentinhaber: Opitz GmbH, 63741 Aschaffenburg (DE)
(72) Erfinder: OPITZ, Wolfgang, 61741 Aschaffenburg (DE)
(74) Vertreter: TBK
(86) Internationale Anmeldenummer: PCT/EP2010/055888
(87) Internationale Veröffentlichungsnummer: WO 2010/149417

(56) Entgegenhaltungen:
- DE-A1- 19 928 044
- DE-C1- 4 415 583
- DE-U1- 29 717 308
- JP-A- 10 044 163
- JP-A- 10 264 161
- JP-U- 60 088 714
- JP-U- 61 045 112
- US-A- 4 909 725

## Beschreibung

Die vorliegende Erfindung bezieht sich auf einen Kennzeichnungsstempel zum Einsetzen in ein Form- oder Prägewerkzeug zur Metall- oder Kunststoffmarkierung.

Verschiedene Oberflächen von Formprodukten weisen häufig verschiedene Markierungen, wie z. B. Herstellungsdatum, Losnummer, Produktnummer usw. auf, die zu verschiedenen Zwecken genutzt werden können, so z.B. zur Überprüfung von Materialeigenschaften bestimmter Chargen oder zur Unterstützung bei der Organisation in der Lagerhaltung.

Diese Markierungen werden im allgemeinen durch eine Prägevorrichtung in das zu markierende Produkt geprägt. Die Prägevorrichtung weist einen Kennzeichnungsstempel auf, der an seiner Stirnfläche mit entsprechenden Markierungen versehen ist, die auf das Formprodukt aufgebracht werden können.

Ein solcher Kennzeichnungsstempel besteht in der Regel aus einem (häufig zylindrischen) Grundkörper (Gehäuse) mit abformbarer Markierung an der Stirnseite, der am Prägewerkzeug befestigt wird, und einem verstellbaren Markierungs- oder Prägekörper (Verstellkörper), der im Grundkörper sitzt und an seiner Stirnseite mit weiteren aufzuprägenden Informationen versehen worden ist. Die Stirnseite von Grundkörper und verstellbarem Markierungskörper fluchten zueinander und sind dem mit der Prägung zu versehenen Produkt (Metall oder Kunststoff) zugewandt. Somit ist an der Stirnfläche des Grundkörpers ein äußerer Kennzeichnungsbereich und an der Stirnfläche des verstellbaren Markierungskörpers ein innerer Kennzeichnungsbereich vorgesehen.

In dem deutschen Gebrauchsmuster DE 93 14 975 U1 ist ein Kennzeichnungsstempel offenbart. Dieser Kennzeichnungsstempel weist in einem zylindrischen Gehäusekörper einen oder mehrere Verstellkörper auf, deren Stirnseiten mit der Stirnseite des Gehäusekörpers fluchten. Die Verstellkörper sind aus dem Gehäusekörper in der Richtung entnehmbar, die entgegengesetzt zur Stirnseite ist.

Ein weiterer Kennzeichnungsstempel ist in der DE 197 30 772 A1 offenbart. Dieser Kennzeichnungsstempel weist in einem zylindrischen Gehäusekörper einen Verstellkörper auf, der per Feder so vorgespannt wird, dass seine Stirnseite zur Stirnseite des Gehäusekörpers fluchtet. Die Feder wirkt dabei in Axialrichtung auf eine Einsatznut am Verstellkörper.

Die Druckschriften JP 61 045112 U, DE 199 28 044 A1 und DE 297 17 308 U offenbaren jeweils einen Kennzeichnungsstempel mit einem am Gehäuse verstellbaren Verstellkörper. Sowohl der Verstellkörper als auch das Gehäuse weisen eine Vielzahl an Rastnasen und den Rastnasen zugeordnete Einrastnuten auf.

Die Druckschriften JP 60 088714 U, JP 10 264161 A und JP 10 044163 A offenbaren jeweils einen Kennzeichnungsstempel mit einem am Gehäuse verstellbaren Verstellkörper. Diese Druckschriften lehren keine Rastnasen, aber elastisch vorspannbare Rastkugeln.

### Aufgabe der vorliegenden Erfindung

Somit ist eine Aufgabe der Erfindung, einen Kennzeichnungsstempel mit möglichst kleinen Einbaumaßen und mit einem Minimum an Bauteilen bereitzustellen, der daher wirtschaftlich herstellbar ist. Außerdem soll die Einrastfunktion vorteilhaft gestaltet werden.

### Lösung der Aufgabe

Diese Aufgabe ist durch einen Kennzeichnungsstempel mit den Merkmalen des beigefügten Anspruchs 1 oder 2 gelöst.

Vorteilhafte Weiterbildungen sind Gegenstand der weiteren Ansprüche.

Bei dem Kennzeichnungsstempel der vorliegenden Erfindung ist der Einrastvorgang zwischen Verstellelement und Gehäusekörper so gestaltet, dass der Werkzeugdruck (Prägedruck, Forminnendruck) zur Verstärkung der Einrastkraft genutzt werden kann, um mit minimalen Einrasttiefen möglichst viele Einraststellen in möglichst kleinen Stempelabmessungen zu integrieren, so dass eine geringstmögliche Anzahl von Stelleinsätzen (Verstellelemente) für die größtmögliche Anzahl von Grundkörpern (Gehäuse) verwendet werden kann.

Der erfindungsgemäße Kennzeichnungsstempel besteht aus einem (zylindrischen) Grundkörper (Gehäuse) mit abformbarer Markierung, der am Prägewerkzeug befestigt werden kann und einem als eine Schraube ausgebildeten Stelleinsatz (Verstellelement) mit mindestens einer als Anzeigepfeil ausgebildeten Markierung, und einer zur Aufnahme eines Drehwerkzeuges geeigneten Vertiefung, der an seiner Kopfunterseite an einer Anlagefläche im Grundkörper drehbar anliegt und mit seinem an der Kopfunterseite nach innen abgesetzten Gewindeschaft mit einem federvorgespannten gewindespindelartigen Halteteil im Inneren des Grundkörpers lösbar verbunden ist, und weiterhin eine Einrastfunktion zwischen Stelleinsatz (Verstellelement) und Grundkörper (Gehäuse) besitzt.

Die Anlagefläche am Stelleinsatz ist mit einer erhabenen Rastnase versehen und die Anlagefläche am Grundkörper ist mit mehreren vertieften Einrastnuten versehen, wobei diese einstückig am Stelleinsatz bzw. Grundkörper angeformt sind und miteinander in einer axialen Werkzeugdruckrichtung rasten.

Zur Lösung der erfindungsgemäßen Aufgabe, einen Kennzeichnungsstempel mit möglichst kleinen Einbaumaßen zu schaffen, wird die Einrasteinrichtung so angeordnet, dass die Einrastrichtung axial, also in der Werkzeugdruckrichtung und in direkter Wechselwirkung mit diesem Werkzeugdruck (Prägedruck, Forminnendruck) steht, d.h. die Einrastkraft verstärkt sich gemäß dem Werkzeugdruck. Die Einrastkraft, die durch die vorhandene Druckfeder definiert ist, kann auf das notwendige Drehmoment zur Bedienung mittels eines von Hand zu bedienenden Drehwerkzeugs im Zusammenhang mit einem zum Lösen der Einrastverbindung geeigneten Einrastprofil abgestimmt werden. Eine Rastnase ist an der unteren Anlagefläche des Stelleinsatzes einstückig angeformt und mehrere Einrastnuten sind an der entsprechenden Anlagefläche des Grundkörpers einstückig angeformt. Mittels dieser Konstruktion ist es möglich, kleine Einrasttiefen, kleine Einrastabstände und somit kleine Baumaße zu verwirklichen.

Der Grundkörper wird im Werkzeug befestigt und hat an der oberseitigen Ringfläche radial angeordnete verschiedene, aber unveränderliche Markierungen (für Monate, Wochen, Tage, ect.).

Der innere, drehbare Stelleinsatz ist von der Werkzeuginnenseite her austauschbar und hat stirnseitig einen Anzeigepfeil, der auch zur Aufnahme eines Schraubwerkzeuges dient und der auf die Markierungen am äußeren Grundkörper weisend einstellbar ist, sowie wahlweise zusätzliche veränderliche Markierungen, die zu bestimmten Zeiten ausgetauscht werden können (Jahr, Index etc.).

Um eine möglichst kleine Anzahl von wechselbaren (austauschbaren) Stelleinsätzen für alle Sorten an Grundkörpern mit unterschiedlicher Anzahl von einzustellenden Markierungen zu realisieren, ist die Anordnung der Einrasteinrichtung zwischen dem Grundkörper und dem Stelleinsatz so gestaltet, dass am Stelleinsatz eine Rastnase in Position zu seinem Anzeigepfeil angebracht ist und am Grundkörper jeder Markierung eine Einrastnut zugeordnet ist (12 Monate = 12 Einrastnuten; 31 Tage = 31 Einrastnuten, etc.).

Somit wirkt im Gegensatz zum eingangs beschriebenen Stand der Technik der Druckschriften DE 93 14 975 U1 und DE 197 30 772 A1 der Arbeitsdruck in Einrastrichtung und sind die Rastnase und die Einrastnut (ohne zusätzlich zu montierende Bauteile) einstückig am Gehäusekörper bzw. verstellbaren Einsatzkörper ausgebildet. Somit gewährleistet der Kennzeichnungsstempel der vorliegenden Erfindung eine Miniaturisierung von derartigen Kennzeichnungsstempeln. Dadurch ist er sehr wirtschaftlich herstellbar.

### Kurzbeschreibung der Zeichnungen

Figur 1 zeigt eine Ansicht im Längsschnitt eines erfindungsgemäßen Kennzeichnungsstempels.
Figur 2 zeigt eine Draufsicht B auf den erfindungsgemäßen Kennzeichnungsstempel aus Figur 1, wobei das Verstellelement eingefügt ist.
Figur 3 zeigt eine Draufsicht B auf den Kennzeichnungsstempel aus Figur 1, wobei das Verstellelement entnommen ist. Die Symbole der Prägeflächen sind in Figur 2 und 3 zur Erhöhung der Übersichtlichkeit nicht spiegelbildlich dargestellt.
Figur 4 zeigt eine Schnittdarstellung A-A aus Figur 1.

### Beschreibung der Ausführungsbeispiele

Nachstehend sind die Ausführungsbeispiele der vorliegenden Erfindung beschrieben.

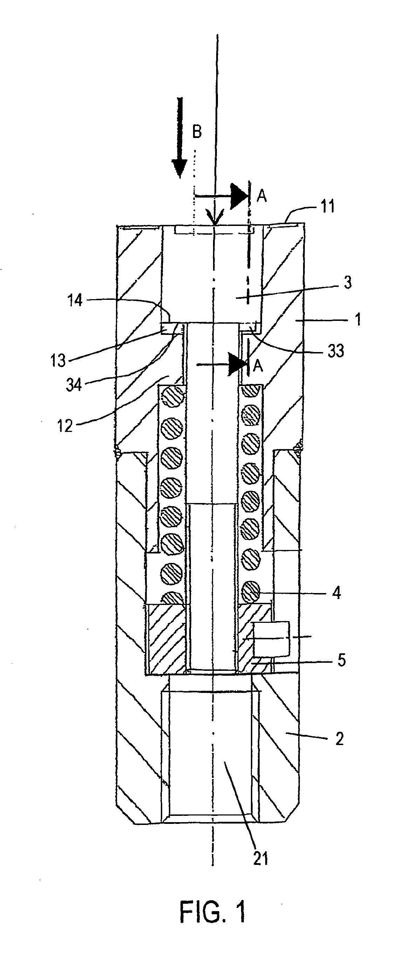

Figur 1 zeigt eine Ansicht im Längsschnitt eines erfindungsgemäßen Kennzeichnungsstempels.

In der Beschreibung der vorliegenden Erfindung ist die obere Seite des Kennzeichnungsstempels als die Seite definiert, die die Markierung aufweist, die auf das zu markierende Werkstück aufzubringen ist. Die untere Seite des Kennzeichnungsstempels ist als die Seite definiert, die von der Markierungsseite abgewandt ist und der Befestigung an einem Prägewerkzeug dient. In Figur 1 ist daher die Markierungsseite oben.

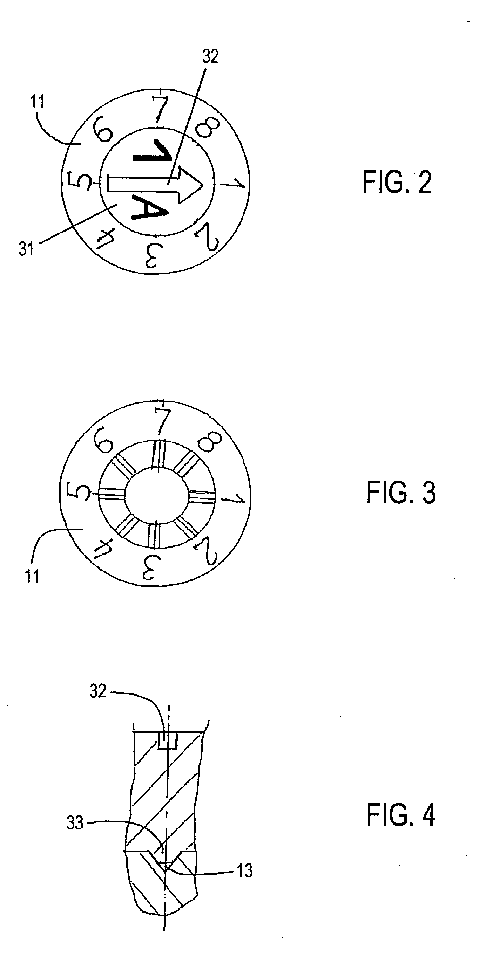

Der erfindungsgemäße Kennzeichnungsstempel besteht aus einem Gehäusekörperoberteil 1 und einem Gehäusekörperunterteil 2. Die Oberseite (obere Fläche) des Gehäusekörperoberteils 1 bildet dabei die Prägeseite (Markierungsseite). Das Gehäusekörperoberteil ist zylinderartig ausgebildet und mit einem Durchgangsloch versehen. Die obere Fläche (Stirnfläche) des Zylinders (der Zylinderwand) ist mit einem Kennzeichnungsbereich 11 versehen, der im Betrieb des Kennzeichnungsstempels zu dem mit der Markierung zu versehenden zu bearbeitenden Produkt (Kunststoff, Metall, etc.) gewandt ist. In vorliegendem Ausführungsbeispiel ist der Kennzeichnungsbereich 11 mit den Zahlen von 1 bis 8 versehen, wie dies in Figur 2 und Figur 3 dargestellt ist. Der Kennzeichnungsbereich 11 befindet sich somit an der Endfläche bzw. der oberen Stirnfläche des Grundkörperoberteils 1.

Das Durchgangsloch im Gehäusekörperoberteil 1 ist mit einem Gehäusevorsprung 12 versehen, der zur gedachten Mittelachse des Gehäusekörperoberteils 1 hin an der gesamten Innenumfangsfläche des Durchgangslochs vorragt.

Im vorliegenden Ausführungsbeispiel ist der Gehäusevorsprung 12 als ein im Längsschnitt (von Fig. 1) rechtwinkliger Flansch ausgearbeitet, der sich etwas oberhalb der Mitte in axialer Richtung des Grundkörperoberteils 1 befindet. Die nach oben weisende Fläche des Gehäusevorsprungs 12 bildet eine Anlagefläche 14.

Die nach unten weisende Fläche dieses Gehäusevorsprungs 12 bildet ebenfalls eine Anlagefläche (ohne Bezugszeichen).

Im unteren Bereich des Grundkörperoberteils 1 ist ein Absatz in geeigneter Länge für die Montage mit einem Gehäusekörperunterteil 2 ausgearbeitet. Im vorliegenden Ausführungsbeispiel ist daher ein Verbindungsbereich am Außenumfang des Gehäusekörperunterteils 1 so vorgesehen, dass der untere Endbereich einen kleineren Außendurchmesser als der obere Bereich des Gehäusekörperoberteils 1 hat. In diesem Bereich mit geringerem Außendurchmesser des Gehäusekörperoberteils 1 ist ein Gewinde für eine Verbindung mit dem Gehäusekörperunterteil 2 ausgearbeitet.

Das Gehäusekörperunterteil 2 ist ebenfalls als ein länglicher Zylinder ausgebildet, der mit einem Durchgangsloch versehen ist. An der Unterseite des Gehäusekörperunterteils 2 ist das Durchgangsloch zu einem Einschraubloch 21 erweitert, das mit einem Innengewinde versehen ist und dazu dient, in ein entsprechendes Prägewerkzeug oder Markierungswerkzeug eingeschraubt zu werden. Etwas oberhalb des Gewindebereichs des Einschraublochs 21 ist der Innendurchmesser des Durchgangslochs erweitert und hat eine Abmessung, die zur Aufnahme des unteren Abschnitts des Gehäusekörperoberteils 1 geeignet ist. Daher ist der obere Bereich der Innenumfangsseite des Durchgangslochs im Gehäusekörperunterteil 2 mit einem Innengewinde versehen, das im Gewindeeingriff mit dem Außengewinde des unteren Bereichs des Gehäusekörperoberteils 1 steht. Somit überlappen der obere Abschnitt des Gehäusekörperunterteils 2 und der untere Abschnitt des Gehäusekörperoberteils 1 in radialer Richtung.

Der Kennzeichnungsstempel der vorliegenden Erfindung hat des weiteren ein drehbares Verstellelement 3, ein Federelement 4 und ein Federwegeinstellelement 5. Im zusammengeschraubten Zustand bilden das Gehäusekörperoberteil 1 und das Gehäusekörperunterteil 2 einen Federraum entlang des Durchgangslochs zwischen der unteren Anlagefläche des Gehäusevorsprungs 12 und dem ebenfalls als Anlagefläche dienenden Absatz im Gehäusekörperunterteil 2, der sich oberhalb des Einschraublochs 21 befindet und die

Durchmessererweiterung im Durchgangsloch des Gehäusekörperunterteils 2 bildet. In diesem Federraum sind das Federelement 4 und das Federwegeinstellelement 5 in der in Fig. 1 gezeigten Weise untergebracht.

Dabei ist im unteren Bereich angrenzend an die Anlagefläche, die sich oberhalb des Einschraublochs 21 befindet, das Federwegeinstellelement 5 untergebracht, das mutterartig mit einem zentrischen Durchgangsloch ausgebildet ist. In diesem zentrischen Durchgangsloch ist ein Innengewinde ausgearbeitet. Zwischen der oberen Fläche des Federwegeinstellelements 5 und der unteren Anlagefläche des Gehäusevorsprungs 12 ist das Federelement 4 in geeignet vorgespanntem Zustand untergebracht.

Das Verstellelement 3 ist ein zylinderartiger Körper mit einem Kopf an der Oberseite und einem länglichem zylindrischen Abschnitt mit kleinerem Außendurchmesser als am Kopf an der Unterseite. Der Kopf hat einen Außendurchmesser, der so bemessen ist, dass er in den oberen Abschnitt des Gehäusekörperoberteils 1 von oben eingeführt werden kann, wobei die Innenumfangsfläche des oberen Abschnitts des Gehäusekörperoberteils 1 als Führungsfläche für die Außenfläche des Kopfes des Verstellelementes 3 dient. Der Kopf des Verstellelementes 3 kann somit in den oberen Bereich des Gehäusekörperoberteils bis zu der oberen Anlagefläche 14 des Gehäusevorsprungs 12 eingeführt werden. An der oberen Fläche oder Stirnseite ist der Kopf des Verstellelements 3 mit einem Kennzeichnungsbereich 31, wie dies in Figur 2 dargestellt ist, mit einer Verstellnut 32 versehen, in die ein Verstellwerkzeug (z.B. ein schraubendreherartiges Verstellwerkzeug) eingeführt werden kann. Die Verstellnut 32 ist dabei als Pfeil ausgearbeitet, der auf eine der Zahlen des Kennzeichnungsbereichs 11 des Gehäusekörperoberteils 1 zeigt, d.h. im vorliegenden Ausführungsbeispiel auf eine der Zahlen 1 bis 8. Außerdem kann bei Bedarf der Kennzeichnungsbereich 31 weitere Symbole aufweisen, wie dies in Fig. 2 gezeigt ist.

Der Durchmesser des unteren länglichen Zylinderstücks des Verstellelements 3 ist kleiner als der Außendurchmesser des Kopfes. Somit ergibt sich an der Verbindungsstelle zwischen dem länglichen Zylinderstück und dem Kopf ein Absatz.

An diesem Absatz bildet die untere Fläche des Kopfes des Verstellelementes 3 eine Anlagefläche 34, die in Anlage zu der Anlagefläche 14 des Gehäusekörperoberteils 1 steht. Das Verstellelement 3 ist relativ zum Gehäusekörper drehbar, wobei diese Drehbewegung durch ein Verstellwerkzeug bewirkt wird, das in die Verstellnut 32 des Verstellelementes 3 eingeführt wird. Der am Kopf des Verstellelementes 3 vorgesehene eine nach unten gerichtete Verlängerung bildende längliche Zylinder hat einen Außendurchmesser, der kleiner ist, als die Innenumfangsfläche des Gehäusevorsprungs 12 und das Federelement 4. Der untere Abschnitt dieses Zylinders ist mit einem Gewinde versehen, das mit dem Innengewinde des Federwegeinstellelementes 5 in Gewindeeingriff steht. Das Federwegeinstellelement 5 kann entlang dieses länglichen Zylinders des Verstellelementes 3 geschraubt werden, um den Federweg des Federelements 4 und somit seine Vorspannung einzustellen.

Das Verstellelement 3 kann somit in das Durchgangsloch des Gehäusekörperoberteils 1 und Gehäusekörperunterteils 2 oben (Markierungsseite) eingeführt werden, bis die Anlageflächen 14 und 34 aneinander anliegen. Dadurch wird der Betriebszustand erreicht. In diesem Betriebszustand sind die die Markierungsflächen ausbildenden Kennzeichnungsbereiche 11 und 31 zueinander im wesentlichen fluchtend.

Die Anlageflächen 14 und 34 sind nicht gänzlich plan. Der Kopf des Verstellelementes hat an seiner unteren Anlagefläche 34 in dem Bereich, der in Anlage zu der oberen Anlagefläche 14 des Vorsprungs 12 steht, eine Rastnase 33, die als nach unten d.h. in axialer Richtung vorragender Vorsprung ausgebildet ist. Im vorliegenden Ausführungsbeispiel ist die Rastnase 33 V-artig mit abgeflachtem Ende ausgebildet, wie dies in Figur 1 und in der Schnittdarstellung A-A in Figur 4 dargestellt ist. Die Anlagefläche 14 am Gehäusevorsprung 12 ist mit einer Vielzahl an in axialer Richtung des Kennzeichnungsstempels vertieften Einrastnuten 13 versehen, in die die Rastnase 33 einrasten kann. Im vorliegenden Ausführungsbeispiel sind acht Einrastnuten 13 an der Anlagefläche 14 unter gleichem Abstand vorgesehen, die den durch die acht Zahlen im Kennzeichnungsbereich 11 entsprechenden Einstellmöglichkeiten entsprechen. Jede Einrastnut 13 ist so ausgearbeitet, dass die Rastnase 33 derart eingreift, dass die Anlageflächen 14 und 34 plan aneinander anliegen. Im vorliegenden Ausführungsbeispiel ist daher die Einrastnut 13 als V-artige Vertiefung ausgebildet, wie dies in Figur 4 deutlich ersichtlich ist.

Idealerweise erstrecken sich die Rastnase 33 und die Einrastnuten 13 in radialer Richtung. Die Einrastnuten 13 sind vorzugsweise so ausgeformt, dass sie bis an den Innenumfang des oberen Bereichs des Gehäusekörperoberteils 1 reichen. Die Rastnase 33 ist vorzugsweise so ausgeformt, dass ein Zwischenraum zum Innenumfang des oberen Bereichs des Gehäusekörperoberteils 1 belassen bleibt, wie dies in Fig. 1 gezeigt ist.

### Vorteile des Ausführungsbeispiels

Der im vorstehenden Ausführungsbeispiel beschriebene Kennzeichnungsstempel weist zum Verwirklichen der Einrastfunktion das Gehäuseelement 1 und das Verstellelement 3 auf, an denen jeweils die Rastnase 33 bzw. die Einrastnuten 13 einstückig angeordnet sind. Somit weist der Kennzeichnungsstempel eine minimale Anzahl an Bauteilen auf.

Durch diesen Aufbau ist es möglich, kleine Einrasttiefen, kleine Einrastabstände und somit kleine Baumaße zu verwirklichen.

Da im Betrieb der Prägedruck am Verstellelement 3 in der gleichen Richtung wirkt, in der die Rastnase 33 in die Einrastnut 13 gedrückt wird, ist der erfindungsgemäße Kennzeichnungsstempel sehr betriebssicher.

### Weitere Ausführungsbeispiele

Bei einem weiteren Ausführungsbeispiel ist als Alternative die Rastnase nicht am Verstellelement sondern am Gehäusevorsprung vorgesehen. Die Einrastnuten sind entsprechend nicht am Gehäusevorsprung sondern am Verstellelement vorgesehen. Dabei ergibt sich eine ähnliche vorteilhafte Ausgestaltung, die ähnliche Wirkungen erzielt.

Im vorstehend beschriebenen Ausführungsbeispiel ist der Kennzeichnungsbereich 11 mit den Zahlen von 1 bis 8 versehen und sind daher entsprechend acht Einrastnuten 13 vorgesehen. Bei einem weiteren Ausführungsbeispiel können stattdessen im Kennzeichnungsbereich die Zahlen 1 bis 12 und zwölf Einrastnuten vorgesehen sein, wodurch eine Einrasteinstellung unter Berücksichtigung der Monate erzielt wird. Bei einem weiteren Ausführungsbeispiel können im Kennzeichnungsbereich Zahlen 1 bis 31 und einunddreißig Einrastnuten vorgesehen sein, wodurch eine Tageseinstellung berücksichtigt wird. Im Prinzip ist eine beliebige Wahl an im Kennzeichnungsbereich vorgesehenen Zahlen bei entsprechender Zahl an Einrastnuten denkbar. Zudem können auch andere Symbole außer Zahlen im jeweiligen Kennzeichnungsbereich abprägbar sein. Der Kennzeichnungsbereich 11 weist auch in diesem Fall Symbole in einer Anzahl auf, die der Anzahl an Einrastnuten 13 entspricht.

Im vorstehend beschriebenen Ausführungsbeispiel ist die Rastnase 33 V-artig mit abgeflachtem Ende ausgebildet, wie dies in Figur 4 dargestellt ist. Bei einem weiteren Ausführungsbeispiel kann die Rastnase mit abgerundetem Ende ausgebildet sein, wodurch der Verschleiß an der Anlagefläche 14 des Vorsprungs 12 verringert werden kann.

In einem weiteren Ausführungsbeispiel kann die Form der Einrastnut und Rastnase abgewandelt werden. Beispielsweise kann die V-Form der Einrastnut mit einer halbzylinderartigen Form der Rastnase kombiniert werden oder sowohl Einrastnut als auch Rastnase können Halbzylinder sein. Auch in diesem Fall kann der Verschleiß der Anlagefläche 14 verringert werden. Es sind auch andere Formen denkbar, sofern die Einrastfunktion in ausreichend sicherer Weise bewerkstelligt wird.

### Bezugszeichenliste

- 1: Gehäusekörperoberteil
- 11: Kennzeichnungsbereich am Gehäusekörperoberteil 1
- 12: Gehäusevorsprung
- 13: Einrastnut am Gehäusevorsprung 12
- 14: Anlagefläche am Gehäusekörperoberteil 1
- 2: Gehäusekörperunterteil
- 21: Einschraubloch mit Gewinde
- 3: Drehbares Verstellelement
- 31: Kennzeichnungsbereich am Verstellelement 3
- 32: Verstellnut am Verstellelement 3
- 33: Rastnase am Verstellelement 3
- 34: Anlagefläche des Verstellelementes 3
- 4: Federelement
- 5: Federwegeinstellelement

## Patentansprüche

1. Kennzeichnungsstempel mit
einem Gehäuse (1, 2) mit abformbarer Markierung (11) an der Gehäusestirnseite, wobei das Gehäuse aus einem Gehäuseoberteil (1) und einem Gehäuseunterteil (2) besteht, und
einem Verstellelement (3), das in das Gehäuse (1, 2) verstellbar eingesetzt ist und mit stirnseitiger abformbarer Markierung (31) versehen ist, wobei bei Verstellung des Verstellelements (3) zum Gehäuse (1, 2) die Markierung (11) relativ zur Markierung (31) verstellt wird,
wobei ein Vorsprung (12) am Innenumfang des Gehäuses (1, 2) vorgesehen ist, wobei das in das Gehäuse (1, 2) eingesetzte Verstellelement (3) an der nach oben weisenden Fläche des Vorsprungs (12) anliegt; und
an der nach unten weisenden Fläche des Vorsprungs (12) ein Federelement (4) unter Vorspannung anliegt;
**gekennzeichnet durch**
eine Einrasteinrichtung (33, 13) aus einer Rastnase (33), die einstückig am Verstellelement (3) an der zur Stirnseite entgegensetzten Seite in axialer Richtung vorragend angeordnet ist und in einer von einer Vielzahl an Einrastnuten (13) einrastet, die einstückig am Gehäuseoberteil (1) in axialer Richtung vertieft angeordnet sind,
wobei die Einrasteinrichtung (33, 13) am Vorsprung (12) und an einer am Vorsprung (12) anliegenden Anlagefläche (34) des Verstellelements (3) ausgebildet ist.

2. Kennzeichnungsstempel mit
einem Gehäuse (1, 2) mit abformbarer Markierung (11) an der Gehäusestirnseite, wobei das Gehäuse aus einem Gehäuseoberteil (1) und einem Gehäuseunterteil (2) besteht, und
einem Verstellelement (3), das in das Gehäuse (1, 2) verstellbar eingesetzt ist und mit stirnseitiger abformbarer Markierung (31) versehen ist, wobei bei Verstellung des Verstellelements (3) zum Gehäuse (1, 2) die Markierung (11) relativ zur Markierung (31) verstellt wird,
wobei ein Vorsprung (12) am Innenumfang des Gehäuses (1, 2) vorgesehen ist, wobei das in das Gehäuse (1, 2) eingesetzte Verstellelement (3) an der nach oben weisenden Fläche des Vorsprungs (12) anliegt; und
an der nach unten weisenden Fläche des Vorsprungs (12) ein Federelement (4) unter Vorspannung anliegt;
**gekennzeichnet durch**
eine Einrasteinrichtung (33, 13) aus einer Rastnase (33), die einstückig am Gehäuseoberteil in axialer Richtung vorragend angeordnet ist und in einer von einer Vielzahl an Einrastnuten (13) einrastet, die einstückig am Verstellelement an der zur Stirnseite entgegensetzten Seite In axialer Richtung vertieft angeordnet sind,
wobei die Einrasteinrichtung (33, 13) am Vorsprung (12) und an einer am Vorsprung (12) anliegenden Anlagefläche (34) des Verstellelements (3) ausgebildet ist.

3. Kennzeichnungsstempel gemäß einem der Ansprüche 1 oder 2,
**dadurch gekennzeichnet, dass**
die Markierung (11) an der Gehäusestirnseite Symbole in einer Anzahl aufweist, die der Anzahl an Einrastnuten (13) entspricht, und
die Markierung (31) zumindest einen Anzeigepfell (32) aufweist.

4. Kennzeichnungsstempel gemäß einem der Ansprüche 1 bis 3,
**dadurch gekennzeichnet, dass**
die eine Rastnase (33) und die Einrastnuten (13) sich in radialer Richtung erstrecken.

5. Kennzeichnungsstempel gemäß einem der Ansprüche 1 bis 4,
**dadurch gekennzeichnet, dass**
die Einrastnuten (13) sich bis an den Innenumfang des Gehäuseoberteils (1) erstrecken; und
zwischen der Rastnase (33) und dem Innenumfang des oberen Bereichs des Gehäuseoberteils (1) ein Zwischenraum belassen ist.

6. Kennzeichnungsstempel gemäß einem der Ansprüche 3 bis 5,
**dadurch gekennzeichnet, dass**
das Verstellelement (3) an der stirnseitigen abformbaren Markierung (31) den Anzeigepfeil (32) als Vertiefung aufweist, der zur Aufnahme eines Verstellwerkzeuges dient.

## Claims

1. Indexing stamp comprising
a housing (1, 2) having a mouldable mark (11) on the housing end face, wherein the housing consists of a housing upper part (1) and a housing lower part (2), and
an adjusting element (3) inserted adjustable in the housing (1, 2) and provided with a frontal mouldable mark (31),
wherein during adjustment of the adjusting element (3) with respect to the housing (1, 2), the mark (11) is displaced relative to the mark (31),
wherein a protrusion (12) is provided at the inner circumference of the housing (1, 2),
wherein the adjusting element (3) inserted the housing (1, 2), abuts at the upwardly directed surface of the protrusion (12), and
a spring element (4) under pretension abuts at the downwardly directed surface of the protrusion (12),
**characterized by**
a locking means (33, 13) made of one detent (33) which is integral to the adjusting element (3) and is arranged protrudingly in the axial direction on the side opposite to the end face, and engages in one of a plurality of latching grooves (13) arranged integrally at the housing upper part (1) in an recessed way in the axial direction,
wherein the locking means (33, 13) is formed at the protrusion (12) and at a surface (34) of the adjusting element (3), said surface (34) abutting at the protrusion (12).

2. Indexing stamp comprising
a housing (1, 2) having a mouldable mark (11) on the housing end face, wherein the housing consists of a housing upper part (1) and a housing lower part (2), and
an adjusting element (3) inserted adjustable in the housing (1, 2) and provided with a frontal mouldable mark (31),
wherein during adjustment of the adjusting element (3) with respect to the housing (1, 2), the mark (11) is displaced relative to the mark (31),
wherein a protrusion (12) is provided at the inner circumference of the housing (1, 2),
wherein the adjusting element (3) inserted the housing (1, 2), abuts at the upwardly directed surface of the protrusion (12), and
a spring element (4) under pretension abuts at the downwardly directed surface of the protrusion (12),
**characterized by**
a locking means (33, 13) made of one detent (33) which is provided integrally at the housing upper part (1) protruding in the axial direction, and engages in one of a plurality of latching grooves (13) arranged integrally at the adjusting element on the side opposite to the end face, and arranged in an recessed way in the axial direction.
wherein the locking means (33, 13) is formed at the protrusion (12) and at a surface (34) of the adjusting element (3), said surface (34) abutting at the protrusion (12).

3. Indexing according to one of the claims 1 or 2,
**characterized in that**
the mark (11) on the housing end face comprises symbols in a number which corresponds to the number of latching grooves (13), and
the mark (31) comprises at least an indicator arrow (32).

4. Indexing stamp according to one of the claims 1 to 3,
**characterized in that**
the one detent (33) and the latching grooves (13) extend in a radial direction.

5. Indexing stamp according to one of the claims 1 to 4,
**characterized in that**
the latching grooves (13) extends up to the inner circumference of the housing upper part (1), and
a gap is left inserted the detent (33) and the inner circumference of the upper region of the housing upper part (1).

6. Indexing stamp according to one of the claims 3 to 5,
**characterized in that**
on the front side mouldable mark (31) the adjusting element (3) comprises the indicator arrow (32) as a recess which serves to accommodate an adjusting tool.

## Revendications

1. Tampon d'identification comportant
un boîtier (1, 2) présentant un marquage (11) modelable sur sa face frontale de boîtier, ledit boîtier étant composé d'une pièce supérieure de boîtier (1) et d'une pièce inférieure de boîtier (2), et
un élément de réglage (3) monté de manière déplaçable dans le boîtier (1, 2) et pourvu d'un marquage (31) frontal modelable, le marquage (11) étant déplacé par rapport au marquage (31) lors du déplacement de l'élément de réglage (3) par rapport au boîtier (1, 2),
un épaulement (12) étant prévu sur le contour intérieur du boîtier (1, 2), l'élément de réglage (3) monté dans le boîtier (1, 2) reposant contre l'épaulement (12) ; et
un élément à ressort (4) reposant pré-contraint contre la surface de l'épaulement (12) dirigée vers le bas ;
**caractérisé par** un dispositif d'enclenchement (33, 13) constitué d'un ergot d'enclenchement (33), disposé d'un seul tenant contre l'élément de réglage (3) sur le côté opposé au côté frontal, faisant saillie en direction axiale et s'enclenchant dans une rainure d'une pluralité de rainures d'enclenchement (13) disposées d'un seul tenant contre le boîtier (1) et évidées en direction axiale,
le dispositif d'enclenchement (33, 13) étant réalisé sur l'épaulement (12) et sur une surface d'appui (34) de l'élément de réglage (3) reposant contre l'épaulement (12).

2. Tampon d'identification comportant
un boîtier (1, 2) présentant un marquage (11) modelable sur sa face frontale de boîtier, ledit boîtier étant composé d'une pièce supérieure de boîtier (1) et d'une pièce inférieure de boîtier (2), et
un élément de réglage (3) monté de manière déplaçable dans le boîtier (1, 2) et pourvu d'un marquage (31) frontal modelable, le marquage (11) étant déplacé par rapport au marquage (31) lors du déplacement de l'élément de réglage (3) par rapport au boîtier (1, 2),
un épaulement (12) étant prévu sur le contour intérieur du boîtier (1, 2), l'élément de réglage (3) monté dans le boîtier (1, 2) reposant contre l'épaulement (12) ; et
un élément à ressort (4) reposant pré-contraint contre la surface de l'épaulement (12) dirigée vers le bas ;
**caractérisé par** un dispositif d'enclenchement (33, 13) constitué d'un ergot d'enclenchement (33), disposé d'un seul tenant contre la pièce supérieure de boîtier, faisant saillie en direction axiale et s'enclenchant dans une rainure d'une pluralité de rainures d'enclenchement (13) disposées d'un seul tenant contre l'élément de réglage sur le côté opposé au côté frontal et évidées en direction axiale,
le dispositif d'enclenchement (33, 13) étant réalisé sur l'épaulement (12) et sur une surface d'appui (34) de l'élément de réglage (3) reposant contre l'épaulement (12).

3. Tampon d'identification selon la revendication 1 ou 2,
**caractérisé en ce que**
le marquage (11) comporte sur la face frontale de boîtier des symboles en nombre correspondant au nombre de rainures d'enclenchement (13), et
**en ce que** le marquage (31) comprend au moins une flèche indicatrice (32).

4. Tampon d'identification selon l'une des revendications 1 à 3,
**caractérisé en ce que**
l'ergot ou les ergots d'enclenchement (33) et les rainures d'enclenchement (13) s'étendent en direction radiale.

5. Tampon d'identification selon l'une des revendications 1 à 4,
**caractérisé en ce que**
les rainures d'enclenchement (13) s'étendent jusqu'au contour intérieur du boîtier (1) ; et
un interstice est ménagé entre l'ergot ou les ergots d'enclenchement (33) et le contour intérieur de la zone supérieure du boîtier (1).

6. Tampon d'identification selon l'une des revendications 3 à 5,
**caractérisé en ce que**
l'élément de réglage (3) comporte la flèche indicatrice (32) en tant qu'évidement sur le marquage (31) frontal modelable, laquelle sert à la réception d'un outil de réglage.
